# FASCICULE DE BREVET EUROPEEN

(11) **EP 3 127 746 B1**
(45) Date de publication et mention de la délivrance du brevet: **01.11.2023**
(21) Numéro de dépôt: 16182707.6
(22) Date de dépôt: 04.08.2016
(51) Int. Cl.: B60Q 1/068, B60Q 1/076

(54) **DISPOSITIF D'ÉCLAIRAGE ET/OU DE SIGNALISATION D'UN VÉHICULE AUTOMOBILE COMPRENANT AU MOINS DEUX MODULES D'ÉCLAIRAGE**
BELEUCHTUNGS- UND/ODER SIGNALISIERUNGSVORRICHTUNG EINES KRAFTFAHRZEUGS, DIE MINDESTENS ZWEI LEUCHTMODULE UMFASSEN
LIGHTING AND/OR SIGNALLING DEVICE OF A MOTOR VEHICLE COMPRISING AT LEAST TWO LIGHTING MODULES

(30) Priorité: 06.08.2015 FR 1557583
(43) Date de publication de la demande: 08.02.2017
(73) Titulaire: VALEO VISION, 93012 Bobigny Cedex (FR)
(72) Inventeur: TRIPON, Laurent, 49150 Baugé en Anjou (FR)
(74) Mandataire: Valeo Visibility

(56) Documents cités:
- EP-A1- 0 081 399
- EP-A1- 2 796 320
- EP-A1- 2 803 528
- EP-A1- 3 310 616
- EP-A2- 2 679 444

## Description

Le domaine de la présente invention est celui des dispositifs d'éclairage et/ou de signalisation pour un véhicule automobile, tel qu'un projecteur équipant le véhicule automobile.

Le document DE10211816 décrit un dispositif d'éclairage et/ou de signalisation pour un véhicule automobile. Le dispositif d'éclairage et/ou de signalisation est logé à l'intérieur d'un boîtier qui forme une enveloppe dudit dispositif. Le dispositif d'éclairage et/ou de signalisation comprend deux modules d'éclairage, dont un premier module d'éclairage prévu pour fournir une fonction « feu de croisement » et un deuxième module d'éclairage qui est destiné à fournir une fonction « feu de route ». Le premier module d'éclairage et le deuxième module d'éclairage sont reliés l'un à l'autre par un élément de liaison qui s'étend de l'un à l'autre des modules d'éclairage.

Pour modifier une hauteur de l'éclairage fourni par le premier module d'éclairage et le deuxième module d'éclairage, notamment en fonction de conditions de circulation du véhicule automobile, le dispositif d'éclairage et/ou de signalisation comprend un moyen de basculement du premier module d'éclairage et du deuxième module d'éclairage.

Le moyen de basculement comprend une première charnière affectée au premier module d'éclairage et une deuxième charnière affectée au deuxième module d'éclairage. La première charnière et la deuxième charnière équipent chacune une partie inférieure respective desdits modules en position d'utilisation du dispositif d'éclairage et/ou de signalisation.

Le moyen de basculement comprend aussi une vis de réglage dont une extrémité est en relation avec l'élément de liaison de telle sorte qu'un mouvement en translation de la vis de réglage provoque un mouvement en rotation des modules autour de leur charnière respective. Le mouvement en basculement des modules est coordonné par l'élément de liaison qui relie mécaniquement le premier module d'éclairage et le deuxième module d'éclairage.

Ces dispositions sont telles qu'un déplacement angulaire du premier module d'éclairage et un déplacement angulaire du deuxième module d'éclairage sont identiques, autour d'axes de pivotement disposés sensiblement dans un même plan horizontal. On comprend que pour permettre le déplacement angulaire des modules, il convient de prévoir un dégagement suffisant entre chaque module et les parois du boîtier qui l'entourent, afin que ces parois ne bloquent pas le pivotement du module. Dans le cas de modules dont la position de réglage est telle que les modules éclairent plus haut que dans la position standard, il convient alors de prévoir la même dimension de dégagement entre chaque module et la paroi supérieure du boîtier. Or ceci est susceptible de présenter un inconvénient selon les architectures de projecteurs. Il peut notamment être souhaité que le dégagement entre la paroi supérieure du boîtier et chacun des modules ne soit pas le même sur toute la dimension du projecteur.

Il est également connu du document EP 2 679 444 A2 un dispositif d'éclairage et/ou de signalisation d'un véhicule automobile comprenant au moins deux modules d'éclairage pouvant basculer chacun autour d'un axe de rotation et étant reliés mécaniquement par un élément de liaison.

Un but de la présente invention est de proposer un dispositif d'éclairage et/ou de signalisation destiné à équiper un véhicule automobile avec les caractéristiques de la revendication 1, le dispositif d'éclairage et/ou de signalisation comprenant un boîtier logeant deux modules d'éclairage aptes à délivrer deux fonctions d'éclairages distinctes, le dispositif d'éclairage et/ou de signalisation étant compacte, robuste et efficace, les modules d'éclairage étant associés à un moyen de basculement qui est à même d'orienter simultanément les modules d'éclairage entre une position standard et une position modifiée dans laquelle ils émettent dans la même direction, l'axe de pivotement de chaque module étant distinct l'un de l'autre.

Un dispositif de la présente invention est un dispositif d'éclairage et/ou de signalisation d'un véhicule automobile comprenant un boîtier logeant au moins un premier module d'éclairage pour l'émission de premiers rayons lumineux selon une direction principale d'émission et un deuxième module d'éclairage pour l'émission de deuxièmes rayons lumineux selon une même direction principale d'émission. Le premier module est apte à basculer autour d'un premier axe de rotation et le deuxième module d'éclairage est apte à basculer autour d'un deuxième axe de rotation. Le dispositif d'éclairage et/ou de signalisation comprend un moyen de manoeuvre commun desdits modules d'éclairage.

Selon la présente invention, le moyen de manoeuvre est mobile en rotation autour d'un axe de basculement et il comporte un premier bras associé au premier module d'éclairage et un deuxième bras associé au deuxième module d'éclairage. On prévoit notamment dans ce contexte que les deux axes de rotation sont parallèles, ou sensiblement parallèles, à l'axe de basculement, et que les bras sont agencés de part et d'autre de l'axe de basculement.

Selon une caractéristique de l'invention, le premier bras est associé à une partie supérieure du premier module d'éclairage tandis que le deuxième bras est associé à une partie inférieure du deuxième module d'éclairage, ledit premier axe de rotation du premier module étant formé dans la partie inférieure du premier module tandis que ledit deuxième axe de rotation du deuxième module est formé dans la partie supérieure du deuxième module.

Le moyen de manoeuvre peut comporter un bras médian qui est interposé entre le premiers bras et le deuxième bras, le bras médian étant pourvu de l'axe de basculement.

Selon l'invention:
- le bras supérieur du moyen de manoeuvre porte une deuxième liaison articulée avec le premier module ;
- le premier module est porté par un premier cadre de maintien qui est mobile en rotation autour du premier axe de rotation, ladite deuxième liaison articulée étant disposée entre le premier bras et le premier cadre de maintien ; la deuxième liaison articulée est avantageusement du type rotule ;

Avantageusement,
- deux premiers points de maintien du premier cadre déterminent le premier axe de rotation ; les premiers points de maintien sont avantageusement du type rotule ;
- le premier cadre de maintien comporte, de part et d'autre du premier module, un bras de support qui porte les premiers points de maintien et un montant qui est en relation avec la deuxième liaison articulée.

Selon une autre série de caractéristiques, propres à la disposition du deuxième bras, on peut prévoir que :
- le deuxième bras du moyen de manoeuvre porte une troisième liaison articulée avec le deuxième module ; la troisième liaison articulée est avantageusement du type rotule ;
- le deuxième module est porté par un deuxième cadre de maintien qui est mobile en rotation autour du deuxième axe de rotation, ladite troisième liaison articulée étant disposée entre ledit deuxième bras et ledit deuxième cadre de maintien ;
- deux deuxièmes points de maintien du deuxième cadre déterminent le deuxième axe de rotation ; les deuxièmes points de maintien sont avantageusement du type rotule ;
- le deuxième cadre de maintien comporte, de part et d'autre du deuxième module, une branche qui porte les deuxièmes points de maintien et une branche qui est en relation avec la troisième liaison articulée ;
- la première liaison articulée est décalée par rapport à la deuxième liaison articulée relativement à la direction principale d'émission des rayons lumineux ;

Selon l'invention, on peut prévoir qu'un premier débattement mesuré entre le premier module d'éclairage et une paroi du boîtier est différent d'un deuxième débattement mesuré entre le deuxième module d'éclairage et la même paroi du boîtier.

On prévoit des moyens de pilotage en rotation du moyen de manoeuvre. Ces moyens de pilotage peuvent prendre la forme de moyens d'entraînement en translation d'une pièce de réglage porteuse d'une première liaison articulée avec ledit moyen de manoeuvre ; dans ce cas, on peut prévoir que la première liaison articulée est du type rotule, et qu'elle est portée par un bras intermédiaire solidaire de l'organe de manoeuvre et ménagé sensiblement perpendiculairement à l'axe de basculement, la pièce de réglage pouvant être actionnée par la partie mobile de l' actionneur, la partie mobile pouvant être mobile en translation selon un axe de coulissement sensiblement parallèle à la direction d'émission principale des modules d'éclairage.

D'autres caractéristiques, détails et avantages de l'invention ressortiront plus clairement à la lecture de la description donnée ci-après à titre indicatif en relation avec des dessins dans lesquels :
- la figure 1 est une vue schématique en perspective de face d'un dispositif d'éclairage et/ou de signalisation selon l'invention,
- la figure 2 est une vue schématique en perspective prise de l'arrière et de trois quart droit du dispositif d'éclairage et/ou de signalisation illustré sur la figure 1,

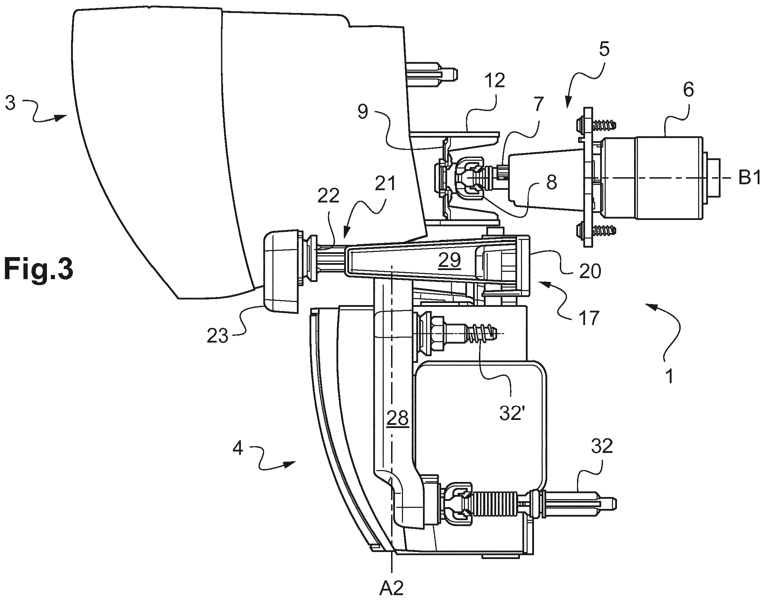

- la figure 3 est une vue schématique de dessus du dispositif d'éclairage et/ou de signalisation illustré sur les figures précédentes,

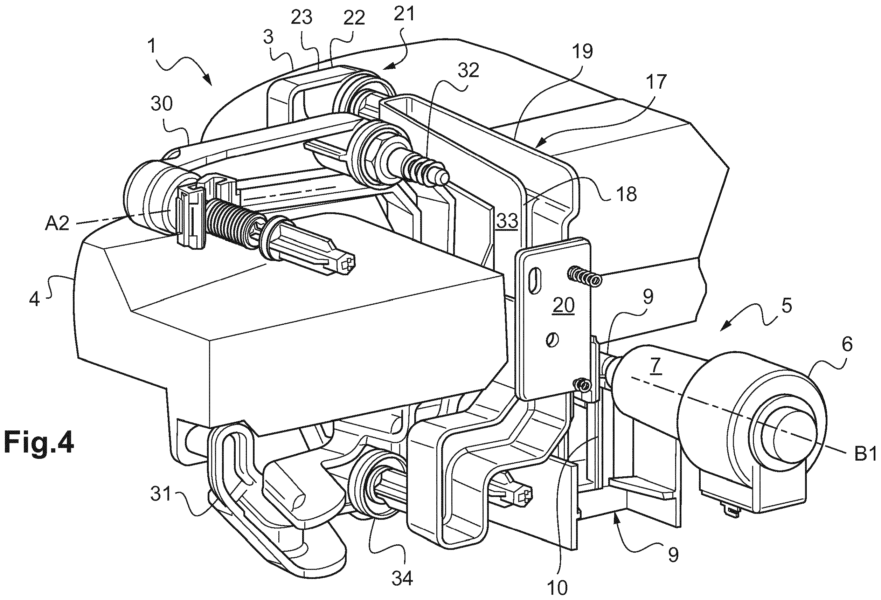

- la figure 4 est une vue schématique en perspective de trois quart gauche du dispositif d'éclairage et/ou de signalisation illustré sur les figures précédentes,

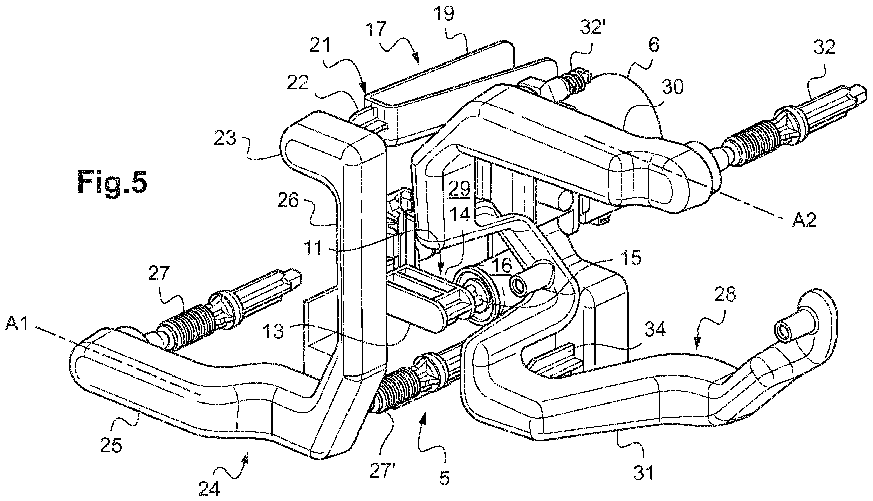

- la figure 5 est une vue schématique en perspective prise de l'avant et de trois quart gauche d'un dispositif de manoeuvre constitutif du dispositif d'éclairage et/ou de signalisation illustré sur les figures précédentes,

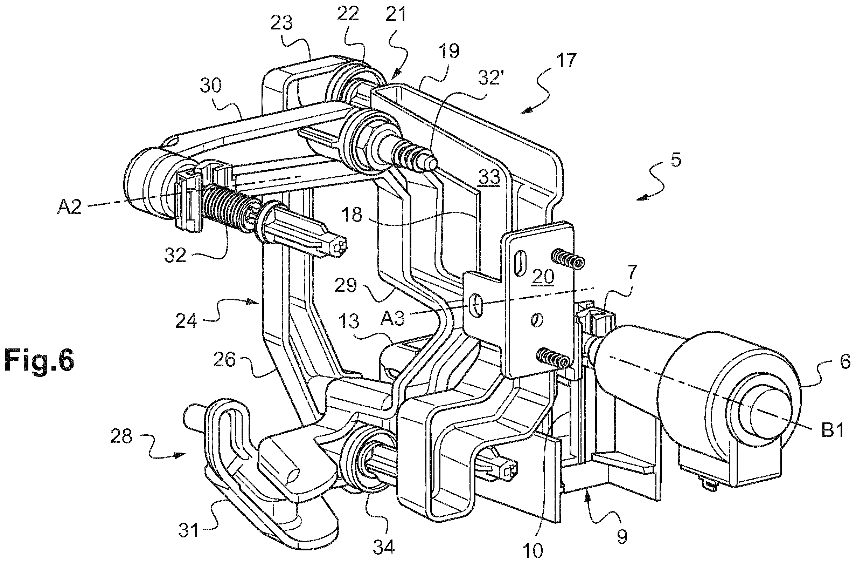

- la figure 6 est une vue schématique en perspective prise de l'arrière et de trois quart gauche du dispositif de manoeuvre illustré sur la figure 5,
- la figure 7 est une vue schématique en perspective prise de l'arrière et de trois quart droit du dispositif de manoeuvre illustré sur les figures 5 et 6,
- la figure 8 est une vue schématique partielle en perspective prise de l'arrière et de trois quart droit du dispositif de manoeuvre illustré sur les figures 5 à 7,
- la figure 9 est une vue schématique partielle en perspective prise de l'avant et de trois quart droit du dispositif de manoeuvre illustré sur les figures 5 à 8.

Il faut tout d'abord noter que les figures exposent l'invention de manière détaillée pour mettre en oeuvre l'invention, lesdites figures pouvant bien entendu servir à mieux définir l'invention le cas échéant.

Un véhicule automobile est couramment équipé d'un dispositif d'éclairage et/ou de signalisation pour éclairer une route sur laquelle le véhicule automobile se déplace et signaler une position du véhicule automobile à d'autres véhicules automobiles et/ou piétons notamment. Le dispositif d'éclairage et/ou de signalisation est plus particulièrement placé à l'avant du véhicule automobile, et en une zone latérale du véhicule automobile. Plus particulièrement encore, le véhicule automobile est couramment équipé d'un dispositif d'éclairage et/ou de signalisation avant gauche disposé près d'une aile avant gauche du véhicule automobile et d'un dispositif d'éclairage et/ou de signalisation avant droit disposé près d'une aile avant droite du véhicule automobile. La description ci-dessous du dispositif d'éclairage et/ou de signalisation avant gauche disposé près d'une aile avant gauche du véhicule automobile s'applique également au dispositif d'éclairage et/ou de signalisation avant droit en remplaçant les caractéristiques droite et gauche. Aussi, ci-après, le dispositif d'éclairage et/ou de signalisation avant gauche est dénommé dispositif d'éclairage et/ou de signalisation.

Au long de la description qui va être faite de l'invention, les termes « vertical », « horizontal », « latéral », « avant », « arrière », « bas », « haut » se réfèrent à des directions ou des sens aisément identifiables en position d'utilisation du dispositif d'éclairage et/ou de signalisation sur le véhicule automobile. Ainsi, le terme « vertical » correspond à une direction parallèle à l'axe de gravité terrestre. Ainsi, le terme « horizontal » correspond à une direction orthogonale à la direction verticale précédemment définie et à une direction parallèle à une direction de progression courante du véhicule automobile en marche rectiligne. Ainsi, le terme « latéral » correspond à une direction transversale du véhicule automobile perpendiculaire à la direction verticale et à la direction horizontale, autrement dit d'un côté droit du véhicule automobile à un côté gauche du véhicule automobile. Par ailleurs, le sens « avant » est caractérisé par le sens de progression courant du véhicule automobile couramment dénommé « en marche avant », c'est-à-dire vers le lieu de projection des faisceaux lumineux produits par le dispositif d'éclairage et/ou de signalisation. Le sens « arrière » est le sens opposé au sens « en marche avant » précédemment défini et correspond donc à un sens rare de progression du véhicule automobile couramment dénommé « en marche arrière » et utilisé préférentiellement lors de manoeuvre du véhicule automobile et non pour une progression courante d'un déplacement de ce dernier. Le sens « bas » détermine une orientation vers un bas de caisse du véhicule automobile tandis que le terme « haut » détermine une orientation vers un toit et/ou un capot du véhicule automobile, c'est-à-dire à l'opposé du sens bas.

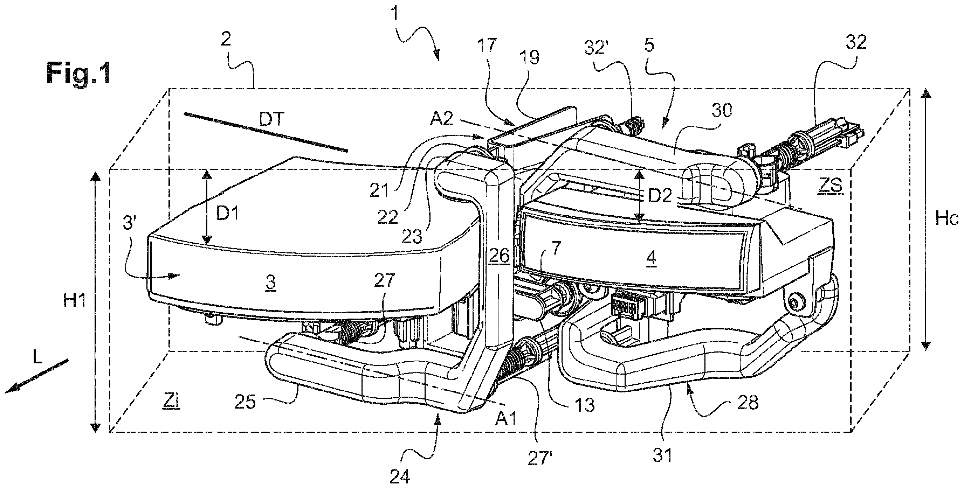

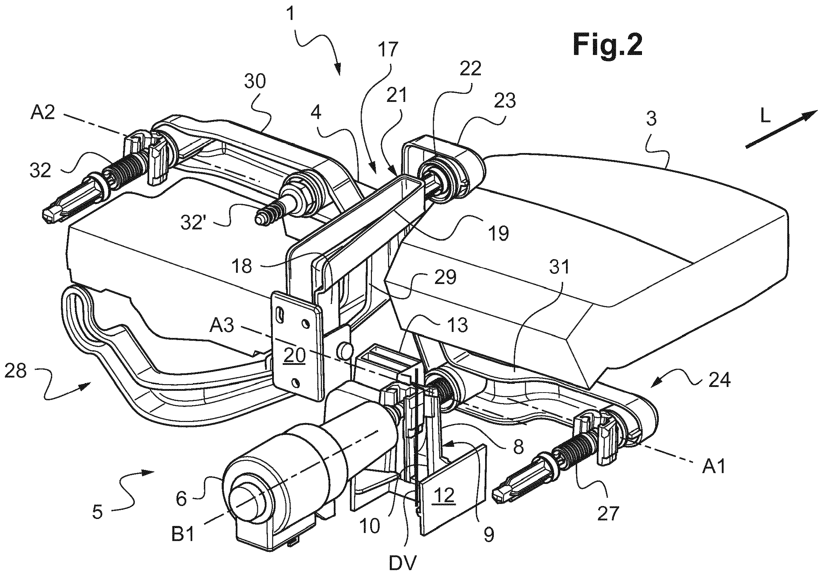

Sur les figures, un dispositif d'éclairage et/ou de signalisation 1 de la présente invention comprend un boîtier 2 qui loge deux modules d'éclairage 3,4. Chaque module d'éclairage 3,4 est prévu pour assurer une fonction particulière d'éclairage. Ainsi, un premier module d'éclairage 3 est apte à fournir une première fonction optique par émission de premiers rayons lumineux selon une direction principale d'émission L (visible sur les figures 1 et 2) et un deuxième module d'éclairage 4 est à même de délivrer une deuxième fonction optique par émission de deuxièmes rayons lumineux selon la même direction principale d'émission. La première fonction optique est par exemple une fonction éclairage du type « feu de route » tandis que la deuxième fonction optique est notamment une fonction éclairage du type « feu de croisement » ou « code ».

Le dispositif d'éclairage et/ou de signalisation 1 comprend un moyen de manoeuvre 5 conjoint du premier module d'éclairage 3 et du deuxième module d'éclairage 4. Autrement dit, le moyen de manoeuvre 5 est apte à déplacer simultanément le premier module d'éclairage 3 et le deuxième module d'éclairage 4, notamment pour modifier la hauteur d'éclairage des modules. Le moyen de manoeuvre 5 est à même de provoquer un mouvement en bascule du premier module d'éclairage 3 et du deuxième module d'éclairage 4 autour d'un axe de rotation respectif. Ainsi, le premier module d'éclairage 3 est mobile en rotation autour d'un premier axe de rotation A₁ et le deuxième module d'éclairage 4 est mobile en rotation autour d'un deuxième axe de rotation A₂. Le premier axe de rotation A₁ et le deuxième axe de rotation A₂ sont distincts et parallèles l'un à l'autre. Le premier axe de rotation A₁ est préférentiellement un axe de rotation bas par rapport à un deuxième axe de rotation A₂ qui surplombe le premier axe de rotation A₁. Autrement dit, le premier axe de rotation A₁ affecte une zone inférieure Zᵢ du premier module d'éclairage 3 tandis que le deuxième axe de rotation A₂ affecte une zone supérieure Zₛ du deuxième module d'éclairage 4.

Le moyen de manoeuvre 5 comprend un actionneur 6, tel qu'un actionneur linéaire du type moteur électrique, qui comporte une partie mobile 7 en translation le long d'un axe de coulissement B₁. L'axe de coulissement B, est préférentiellement orthogonal au premier axe de rotation A₁ et au deuxième axe de rotation A₂. L'actionneur 6 est destiné à manoeuvrer en basculement le premier module d'éclairage 3 et le deuxième module d'éclairage 4 à partir d'un déplacement rectiligne de la partie mobile 7.

La partie mobile 7 est accessoirement fixée à une pièce intermédiaire 8 qui comprend un coulisseau 9. Le coulisseau 9 est apte à guider en translation verticale un mouvement de coulissement de la pièce intermédiaire 8 par rapport au boîtier 2 selon une direction verticale D_{V} (visible sur la figure 2). Ces dispositions permettent de s'assurer que la pièce intermédiaire 8 reste dans l'axe de la partie mobile 7 et ne contraigne pas l'actionneur lors du déplacement du moyen de manoeuvre.

Le coulisseau 9 de la pièce intermédiaire 8 est engagé à l'intérieur d'un rail de guidage 10 que comprend une pièce de réglage 11. Le rail de guidage 10 s'étend selon la direction verticale D_{V} qui est préférentiellement orthogonale à l'axe de coulissement B, ainsi qu'au premier axe de rotation A₁ et au deuxième axe de rotation A₂. La pièce de réglage 11 comprend en outre une première attelle 12 de fixation du moyen de manoeuvre 5 sur le boîtier 2 et un bras de réglage 13 qui s'étend selon une direction transversale D_{T} qui est préférentiellement perpendiculaire à la direction verticale D_{V} et parallèle au premier axe de rotation A₁ et au deuxième axe de rotation A₂.

Le bras de réglage 13 comprend une interface arrière de réglage 14 qui est pourvue d'une première liaison articulée 15, préférentiellement du type rotule ou analogue, avec un bras intermédiaire 16 d'une pièce profilée 17. L'interface arrière de réglage 14 est notamment ménagée à l'arrière du bras de réglage 13, c'est-à-dire sur une zone du bras de réglage 13 qui fait face à l'arrière du véhicule automobile, en position d'utilisation du dispositif d'éclairage et/ou de signalisation 1 sur le véhicule automobile.

La pièce profilée 17 comprend le bras intermédiaire 16, un bras médian 18, un premier bras 19, ici un bras supérieur, et un deuxième bras 19', ici un bras inférieur. Le bras médian 18 et le bras inférieur 19' sont ménagés en prolongement l'un de l'autre et sont coplanaires. Le bras médian 18 et le bras inférieur 19' sont disposés orthogonalement au bras supérieur 19. Le bras médian 18 est interposé entre le bras intermédiaire 16 et le bras supérieur 19. Le bras intermédiaire 16 et le bras supérieur 19 sont parallèles entre eux et parallèles à l'axe de coulissement B₁.

Le bras médian 18 est monté en rotation sur le boîtier 2 par l'intermédiaire d'une équerre 20 de fixation. Autrement dit, la pièce profilée 17 est montée mobile en rotation sur le boîtier 2 par l'intermédiaire de son bras médian 18 autour d'un axe de basculement A₃.

Le bras supérieur 19 et le bras inférieur 19' sont disposés de part et d'autre de cet axe de basculement A₃. Sur les figures 1 et 2 notamment, le bras supérieur 19 est associé à une partie supérieure du premier module d'éclairage 3 tandis que le bras inférieur 19' est associé à une partie inférieure du deuxième module d'éclairage 4. Le premier axe de rotation A₁ du premier module 3 est formé dans la partie inférieure du premier module tandis que le deuxième axe de rotation A₂ du deuxième module 4 est formé dans la partie supérieure du deuxième module.

Le bras supérieur 19 comprend une extrémité avant 21 qui est pourvue d'une deuxième liaison articulée 22 avec un montant supérieur 23 d'un premier cadre 24 de maintien du premier module d'éclairage 3. Autrement dit, le premier cadre 24 de maintien du premier module d'éclairage 3 comprend le montant supérieur 23 qui est relié à un premier bras de support 25 par l'intermédiaire d'une anse 26. Le montant supérieur 23, l'anse 26 et le premier bras de support 25 entourent partiellement le premier module d'éclairage 3. Le premier bras de support 25 est pourvu de deux premiers points de maintien articulés 27,27', de type rotule ou analogue, qui forment conjointement le premier axe de rotation A₁ autour duquel le premier module d'éclairage 3 est monté en bascule.

Ces dispositions sont telles qu'une poussée vers l'avant de la partie mobile 7 selon l'axe de coulissement B₁ provoque un mouvement vers l'avant de la pièce de réglage 11 et parallèlement du bras de réglage 13. Il en découle un mouvement de bascule vers l'avant du bras intermédiaire 16 et un mouvement de bascule vers l'arrière du bras supérieur 19, à partir d'un mouvement de rotation de la pièce profilée 17 autour de l'axe de basculement A₃. Le mouvement de bascule vers l'arrière du bras supérieur 19 induit une traction vers l'arrière du montant supérieur 23, ce qui provoque un mouvement de bascule vers le haut du premier module d'éclairage 3 autour du premier axe de rotation A₁. On comprend que l'on entend par « mouvement de bascule vers le haut » un mouvement de bascule du module d'éclairage, autour de son axe de rotation défini par la charnière fixe, tel que la face de sortie 3' des rayons lumineux issus du premier module d'éclairage 3 s'oriente vers le haut pour relever l'assiette des rayons projetés par ce premier module.

Ces dispositions sont aussi telles qu'une traction vers l'arrière de la partie mobile 7 selon l'axe de coulissement B₁ provoque un mouvement vers l'arrière de la pièce de réglage 11 et parallèlement du bras de réglage 13. Il en découle un mouvement de bascule vers l'arrière du bras intermédiaire 16 et un mouvement de bascule vers l'avant du bras supérieur 19, à partir d'un mouvement de rotation de la pièce profilée 17 autour de l'axe de basculement A₃. Le mouvement de bascule vers l'avant du bras supérieur 19 induit une poussée vers l'avant du montant supérieur 23, ce qui provoque un mouvement de bascule vers le bas du premier module d'éclairage 3 autour du premier axe de rotation A₁. On comprend que l'on entend par « mouvement de bascule vers le bas » un mouvement de bascule du module d'éclairage, autour de son axe de rotation défini par la charnière fixe, tel que la face de sortie 3' des rayons lumineux issus du premier module d'éclairage 3 s'oriente vers le bas pour relever l'assiette des rayons projetés par ce premier module.

Le bras inférieur 19' de la pièce profilée 17 est pourvu d'une troisième liaison articulée 34 avec un deuxième cadre 28 de maintien du deuxième module d'éclairage 4. Le deuxième cadre 28 comprend une branche médiane 29 qui est en relation avec une branche supérieure 30 et une branche inférieure 31. Plus particulièrement, le deuxième cadre 28 est conformé en U dont les bras sont formées par la branche supérieure 30 et la branche inférieure 31 et dont la base est formée par la branche médiane 29. Plus particulièrement encore, la branche supérieure 30 et la branche inférieure 31 s'étendent parallèlement au deuxième axe de rotation A₂ et orthogonalement à l'axe de coulissement B₁.

La branche supérieure 30 est pourvue de deux deuxièmes points de maintien articulés 32,32', de type rotule ou analogue, qui forment conjointement le deuxième axe de rotation A₂ autour duquel le deuxième module d'éclairage 4 est monté en bascule. La branche inférieure 31 est quant à elle en relation avec la troisième liaison articulée 34 équipant le bras inférieur 19' de la pièce profilée 17.

Les liaisons articulées sont agencées de sorte que la première liaison articulée 22 est décalée par rapport à la deuxième liaison articulée 34 relativement à la direction principale d'émission des rayons lumineux, et plus particulièrement, la première liaison articulée 22 associée au premier module d'éclairage 3 est décalée vers l'avant du véhicule par rapport à la deuxième liaison articulée. On observe qu'il peut être intéressant d'aller chercher plus vers l'avant du véhicule le module qui est articulé avec un axe de rotation bas.

Ces dispositions sont telles qu'une poussée vers l'avant de la partie mobile 7 selon l'axe de coulissement B₁ provoque un mouvement vers l'avant de la pièce de réglage 11 et parallèlement du bras de réglage 13, comme déjà décrit ci-avant. Il en découle un mouvement de bascule vers l'arrière du bras inférieur 19' et du deuxième cadre 28, ce qui provoque un mouvement de bascule vers le haut du deuxième module d'éclairage 4 autour du deuxième axe de rotation A₂.

Ces dispositions sont aussi telles qu'une traction vers l'arrière de la partie mobile 7 selon l'axe de coulissement B₁ provoque un mouvement vers l'arrière de la pièce de réglage 11 et parallèlement du bras de réglage 13, comme déjà décrit ci-avant. Il en découle un mouvement de bascule vers l'avant du bras inférieur 19' et du deuxième cadre 28, à partir d'un mouvement de bascule de la pièce profilée 17 autour du axe de basculement A₃. Le mouvement de bascule vers l'avant du deuxième cadre 28 provoque un mouvement de bascule vers le bas du deuxième module d'éclairage 4 autour du deuxième axe de rotation A₂.

Il découle de ces dispositions que la pièce profilée 17 comprend de haut en bas le bras supérieur 19 qui est pourvu de la deuxième liaison articulée 22, puis du bras médian 18 qui est pourvu de l'axe de basculement A₃, puis du bras intermédiaire 16 qui est pourvu de la première liaison articulée 15, puis du bras inférieur 19' qui est pourvu de la troisième liaison articulée 34. Les positions respectives de la deuxième liaison articulée 22 et de la troisième liaison articulée 34 de part et d'autre de l'axe de basculement A₃ induit un mouvement inverse du premier cadre 24 et du deuxième cadre 28 lors d'un mouvement du bras de réglage 13, le premier cadre 24 et le deuxième cadre 28 étant pourvus respectivement d'axes de rotation A₁,A₂ qui sont ménagés en des zones opposées, respectivement inférieure et supérieure, du dispositif d'éclairage et/ou de signalisation 1, pour permettre finalement un mouvement de bascule dans le même sens, vers le haut ou vers le bas, du premier module d'éclairage 3 et du deuxième module d'éclairage 4.

Il en résulte qu'une poussée vers l'avant de la partie mobile 7 selon l'axe de coulissement B₁ provoque un mouvement de bascule vers le haut du premier module d'éclairage 3 autour du premier axe de rotation A₁ et un mouvement de bascule vers le haut du deuxième module d'éclairage 4 autour du deuxième axe de rotation A₂. Il découle aussi de l'ensemble de ces dispositions qu'une traction vers l'arrière de la partie mobile 7 selon l'axe de coulissement B₁ provoque un mouvement de bascule vers le bas du premier module d'éclairage 3 autour du premier axe de rotation A₁ et un mouvement de bascule vers le bas du deuxième module d'éclairage 4 autour du deuxième axe de rotation A₂. Autrement dit, quel que soit le mouvement en translation de la partie mobile 7, le premier module d'éclairage 3 et le deuxième module d'éclairage 4 basculent l'un et l'autre selon le même sens, soit trigonométrique, soit horaire.

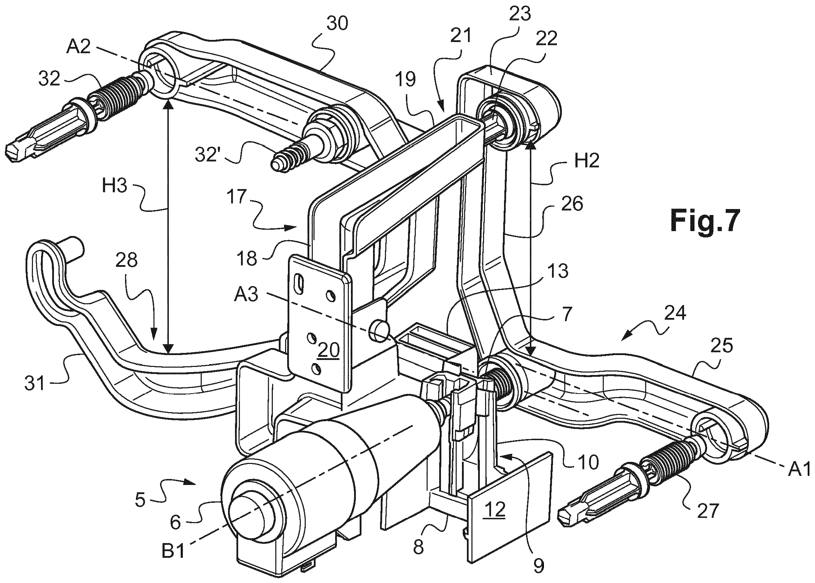

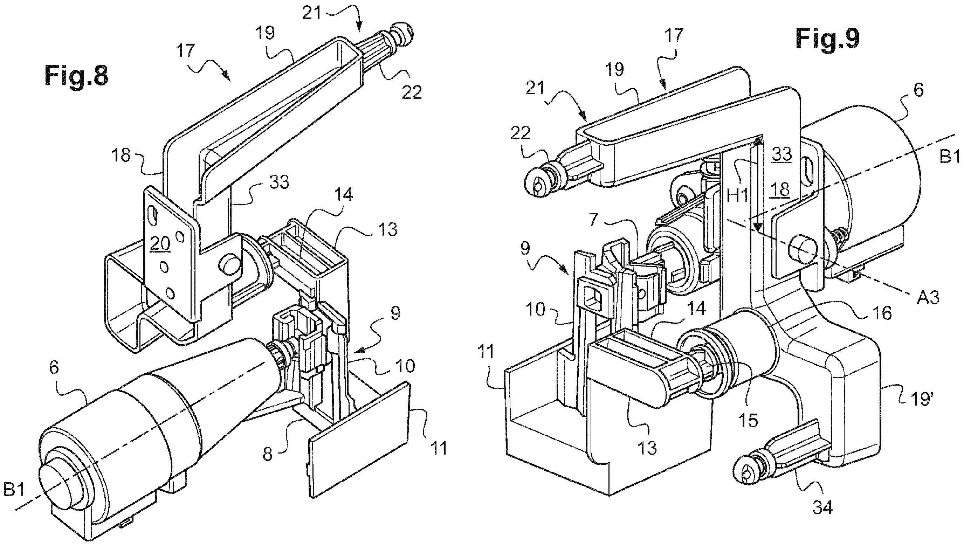

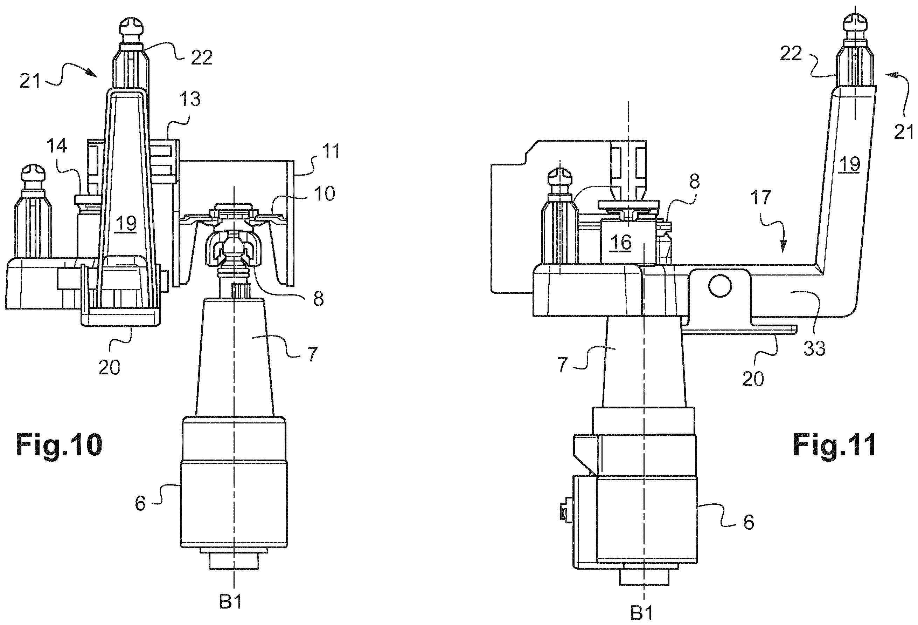

De plus, selon une première hauteur H₁ (visible sur la figure 9) d'une portion supérieure 33 prise entre le bras supérieur 19 et l'axe de basculement A₃ et une deuxième hauteur H₂ (visible sur la figure 7) de la première anse 26, un premier débattement D₁ (visible sur la figure 1) mesuré entre le premier module d'éclairage 3 et une paroi, ici supérieure, du boîtier 2 est susceptible d'être différent d'un deuxième débattement D₂ (visible sur la figure 1) mesuré entre le deuxième module d'éclairage 4 et la même paroi, ici supérieure, du boîtier 2, le deuxième débattement D₂ étant notamment déterminé par une troisième hauteur H₃ (visible sur la figure 7) de la branche médiane 29 mesurée entre la branche supérieure 30 et la branche inférieure 31. Il en découle finalement une possibilité, parmi d'autres, de disposer d'un boîtier 2 qui est effilé latéralement, c'est-à-dire qui présente une hauteur latérale Hₗ qui est inférieure à une hauteur centrale H_{c}.

Enfin, selon la première hauteur H₁ de la portion supérieure 33 et la deuxième hauteur H₂ de la première anse 26, un premier déplacement angulaire du premier module d'éclairage 3 est susceptible d'être différent d'un deuxième déplacement angulaire du deuxième module d'éclairage 4, les déplacements angulaires des modules d'éclairage 3,4 étant mesurés autour des axes de rotation respectifs A₁,A₂.

A la lumière de la description du dispositif d'éclairage et/ou de signalisation 1 ci-dessus, les termes « vertical », « horizontal », « latéral », « avant », « arrière », « bas », « haut » sont également définis en rapport avec des éléments constitutifs du dispositif d'éclairage et/ou de signalisation 1. Ainsi, le terme « vertical » correspond à une direction parallèle à un axe d'allongement de la branche médiane 29. Ainsi, le terme « horizontal » correspond à une direction parallèle à l'axe de coulissement B₁. Ainsi, le terme « latéral » correspond à une direction parallèle à un axe d'allongement du bras de réglage 13. Par ailleurs, le sens « avant » est caractérisé par un allongement de l'actionneur 6 tandis sur le sens « arrière » correspond à une rétractation de l'actionneur 6. Le terme « bas » est défini par les premiers points de maintien articulés 27,27' par opposition aux deuxièmes points de maintien articulés 32,32' qui définissent le terme « haut ».

Des variantes de réalisation sont possibles, notamment dans la forme de la pièce profilée. Par ailleurs, il est possible de prévoir des moyens d'entraînement en rotation de l'organe manoeuvre différentes de ceux présentés ci-dessus et formés de la pièce de réglage mue par la partie mobile de l'actionneur.

## Revendications

1. Dispositif d'éclairage et/ou de signalisation (1) d'un véhicule automobile comprenant un boîtier (2) logeant au moins un premier module d'éclairage (3) pour l'émission de premiers rayons lumineux selon une direction principale d'émission (L), ledit premier module étant apte à basculer autour d'un premier axe de rotation (A₁), un deuxième module d'éclairage (4) pour l'émission de deuxième rayons lumineux selon la même direction principale d'émission, ledit deuxième module étant apte à basculer autour d'un deuxième axe de rotation (A₂), et un moyen de manoeuvre (5) commun auxdits deux modules d'éclairage (3,4), le moyen de manoeuvre (5) étant mobile en rotation autour d'un axe de basculement (A₃) et comportant un premier bras (19) associé au premier module d'éclairage (3) et un deuxième bras (19') associé au deuxième module d'éclairage (4), le premier bras (19) étant associé à une partie supérieure du premier module d'éclairage (3) tandis que le deuxième bras (19') est associé à une partie inférieure du deuxième module d'éclairage (4), ledit premier axe de rotation (A₁) du premier module (3) étant formé dans la partie inférieure du premier module tandis que ledit deuxième axe de rotation (A₂) du deuxième module (4) est formé dans la partie supérieure du deuxième module, le premier bras (19) du moyen de manoeuvre portant une deuxième liaison articulée (22) avec le premier module, le moyen de manoeuvre comprenant en outre un actionneur (6), tel qu'un actionneur linéaire du type moteur électrique, qui comporte une partie mobile (7) en translation le long d'un axe de coulissement (B₁), préférentiellement orthogonal au premier axe de rotation (A₁) et au deuxième axe de rotation (A₂), **caractérisé en ce que** le premier module est porté par un premier cadre (24) de maintien qui est mobile en rotation autour du premier axe de rotation (A₁), ladite deuxième liaison articulée (22) étant disposée entre ledit premier bras (19) et ledit premier cadre (24) de maintien, et **en ce que** la partie mobile (7) est fixée à une pièce intermédiaire (8) qui comprend un coulisseau (9) apte à guider en translation verticale un mouvement de coulissement de la pièce intermédiaire (8) par rapport au boîtier (2), en position d'utilisation du dispositif d'éclairage et/ou de signalisation sur le véhicule automobile.

2. Dispositif d'éclairage et/ou de signalisation (1) selon la revendication 1, **caractérisé en ce que** lesdits axes de rotation sont sensiblement parallèles à l'axe de basculement (A₃).

3. Dispositif d'éclairage et/ou de signalisation (1) selon la revendication 1 ou 2, **caractérisé en ce que** lesdits bras sont agencés de part et d'autre de l'axe de basculement (A₃).

4. Dispositif d'éclairage et/ou de signalisation (1) selon l'une quelconque des revendications précédentes, **caractérisé en ce que** deux premiers points de maintien (27,27') du premier cadre (24) déterminent le premier axe de rotation (A1).

5. Dispositif d'éclairage et/ou de signalisation (1) selon la revendication précédente, **caractérisé en ce que** les premiers points de maintien (27,27') sont du type rotule.

6. Dispositif d'éclairage et/ou de signalisation (1) selon l'une quelconque des revendications 4 et 5, **caractérisé en ce que** le premier cadre (24) de maintien comporte, de part et d'autre du premier module (3), un bras de support (25) qui porte les premiers points de maintien (27,27') et un montant (23) qui est en relation avec la deuxième liaison articulée (22).

7. Dispositif d'éclairage et/ou de signalisation (1) selon l'une quelconque des revendications précédentes, **caractérisé en ce que** le deuxième bras (19') du moyen de manoeuvre (5) porte une troisième liaison articulée (34) avec le deuxième module (4).

8. Dispositif d'éclairage et/ou de signalisation (1) selon la revendication 7, **caractérisé en ce que** le deuxième module (4) est porté par un deuxième cadre (28) de maintien qui est mobile en rotation autour du deuxième axe de rotation (A₂), ladite troisième liaison articulée (34) étant disposée entre ledit deuxième bras (19') et ledit deuxième cadre (28) de maintien.

9. Dispositif d'éclairage et/ou de signalisation (1) selon la revendication précédente, **caractérisé en ce que** deux deuxièmes points de maintien (32,32') du deuxième cadre (28) déterminent le deuxième axe de rotation (A₂).

10. Dispositif d'éclairage et/ou de signalisation (1) selon la revendication précédente, **caractérisé en ce que** les deuxièmes points de maintien (32, 32') sont du type rotule.

11. Dispositif d'éclairage et/ou de signalisation (1) selon l'une quelconque des revendications 9 et 10, **caractérisé en ce que** le deuxième cadre (28) de maintien comporte, de part et d'autre du deuxième module (4), une branche (30) qui porte les deuxièmes points de maintien (32,32') et une branche (31) qui est en relation avec la troisième liaison articulée (34).

12. Dispositif d'éclairage et/ou de signalisation (1) selon la revendication 7, **caractérisé en ce que** la deuxième liaison articulée (22) est décalée par rapport à la troisième liaison articulée (34) relativement à la direction principale d'émission des rayons lumineux (L).

13. Dispositif d'éclairage et/ou de signalisation (1) selon l'une quelconque des revendications précédentes, **caractérisé en ce qu'**un premier débattement (D₁) mesuré entre le premier module d'éclairage (3) et une paroi du boîtier (2) est différent d'un deuxième débattement (D₂) mesuré entre le deuxième module d'éclairage (4) et la même paroi du boîtier (2).

14. Dispositif d'éclairage et/ou de signalisation (1) selon l'une quelconque des revendications précédentes, **caractérisé en ce que** l'actionneur (6) forme des moyens de pilotage en rotation du moyen de manoeuvre (5).

15. Dispositif d'éclairage et/ou de signalisation (1) selon la revendication 14, **caractérisé en ce que** la partie mobile (7) de l'actionneur (6) entraîne en translation une pièce de réglage (11) porteuse d'une première liaison articulée (15) avec ledit moyen de manoeuvre (5).

## Patentansprüche

1. Beleuchtungs- und/oder Signalisierungsvorrichtung (1) eines Kraftfahrzeugs, welche ein Gehäuse (2) umfasst, das mindestens ein erstes Leuchtmodul (3) zum Aussenden von ersten Lichtstrahlen in einer Hauptemissionsrichtung (L), wobei das erste Modul in der Lage ist, um eine erste Drehachse (A₁) zu schwenken, ein zweites Leuchtmodul (4) zum Aussenden von zweiten Lichtstrahlen in derselben Hauptemissionsrichtung, wobei das zweite Modul in der Lage ist, um eine zweite Drehachse (A₂) zu schwenken, und ein gemeinsames Betätigungsmittel (5) für die zwei Leuchtmodule (3, 4) aufnimmt, wobei das Betätigungsmittel (5) drehbeweglich um eine Schwenkachse (A₃) ist und einen dem ersten Leuchtmodul (3) zugeordneten ersten Arm (19) und einen dem zweiten Leuchtmodul (4) zugeordneten zweiten Arm (19') aufweist, wobei der erste Arm (19) mit einem oberen Teil des ersten Leuchtmoduls (3) verbunden ist, während der zweite Arm (19') mit einem unteren Teil des zweiten Leuchtmoduls (4) verbunden ist, wobei die erste Drehachse (A₁) des ersten Moduls (3) im unteren Teil des ersten Moduls ausgebildet ist, während die zweite Drehachse (A₂) des zweiten Moduls (4) im oberen Teil des zweiten Moduls ausgebildet ist, wobei der erste Arm (19) des Betätigungsmittels eine zweite Gelenkverbindung (22) mit dem ersten Modul trägt, wobei das Betätigungsmittel außerdem einen Aktuator (6) umfasst, wie etwa einen Linearantrieb vom Typ eines Elektromotors, welcher einen Teil (7) aufweist, der translatorisch beweglich entlang einer Gleitachse (B₁) ist, die vorzugsweise orthogonal zur ersten Drehachse (A₁) und zur zweiten Drehachse (A₂) ist,
**dadurch gekennzeichnet, dass** das erste Modul von einem ersten Halterahmen (24) getragen wird, welcher drehbeweglich um die erste Drehachse (A₁) ist, wobei die zweite Gelenkverbindung (22) zwischen dem ersten Arm (19) und dem ersten Halterahmen (24) angeordnet ist, und dadurch, dass der bewegliche Teil (7) an einem Zwischenstück (8) befestigt ist, welches eine Gleitführung (9) umfasst, die in der Lage ist, in der Verwendungsposition der Beleuchtungs- und/oder Signalisierungsvorrichtung am Kraftfahrzeug eine Gleitbewegung des Zwischenstücks (8) in Bezug auf das Gehäuse (2) in vertikaler Translation zu führen.

2. Beleuchtungs- und/oder Signalisierungsvorrichtung (1) nach Anspruch 1, **dadurch gekennzeichnet, dass** die Drehachsen im Wesentlichen parallel zur Schwenkachse (A₃) sind.

3. Beleuchtungs- und/oder Signalisierungsvorrichtung (1) nach Anspruch 1 oder 2, **dadurch gekennzeichnet, dass** die Arme beiderseits der Schwenkachse (A₃) angeordnet sind.

4. Beleuchtungs- und/oder Signalisierungsvorrichtung (1) nach einem der vorhergehenden Ansprüche, **dadurch gekennzeichnet, dass** zwei erste Haltepunkte (27, 27') des ersten Rahmens (24) die erste Drehachse (A₁) bestimmen.

5. Beleuchtungs- und/oder Signalisierungsvorrichtung (1) nach dem vorhergehenden Anspruch, **dadurch gekennzeichnet, dass** die ersten Haltepunkte (27, 27') vom Typ Kugelgelenk sind.

6. Beleuchtungs- und/oder Signalisierungsvorrichtung (1) nach einem der Ansprüche 4 und 5, **dadurch gekennzeichnet, dass** der erste Halterahmen (24) beiderseits des ersten Moduls (3) einen Stützarm (25), welcher die ersten Haltepunkte (27, 27') trägt, und eine Strebe (23), welche mit der zweiten Gelenkverbindung (22) in Verbindung steht, aufweist.

7. Beleuchtungs- und/oder Signalisierungsvorrichtung (1) nach einem der vorhergehenden Ansprüche, **dadurch gekennzeichnet, dass** der zweite Arm (19') des Betätigungsmittels (5) eine dritte Gelenkverbindung (34) mit dem zweiten Modul (4) trägt.

8. Beleuchtungs- und/oder Signalisierungsvorrichtung (1) nach Anspruch 7, **dadurch gekennzeichnet, dass** das zweite Modul (4) von einem zweiten Halterahmen (28) getragen wird, welcher drehbeweglich um die zweite Drehachse (A₂) ist, wobei die dritte Gelenkverbindung (34) zwischen dem zweiten Arm (19') und dem zweiten Halterahmen (28) angeordnet ist.

9. Beleuchtungs- und/oder Signalisierungsvorrichtung (1) nach dem vorhergehenden Anspruch, **dadurch gekennzeichnet, dass** zwei zweite Haltepunkte (32, 32') des zweiten Rahmens (28) die zweite Drehachse (A₂) bestimmen.

10. Beleuchtungs- und/oder Signalisierungsvorrichtung (1) nach dem vorhergehenden Anspruch, **dadurch gekennzeichnet, dass** die zweiten Haltepunkte (32, 32') vom Typ Kugelgelenk sind.

11. Beleuchtungs- und/oder Signalisierungsvorrichtung (1) nach einem der Ansprüche 9 und 10, **dadurch gekennzeichnet, dass** der zweite Halterahmen (28) beiderseits des zweiten Moduls (4) einen Schenkel (30), welcher die zweiten Haltepunkte (32, 32') trägt, und einen Schenkel (31), welche mit der dritten Gelenkverbindung (34) in Verbindung steht, aufweist.

12. Beleuchtungs- und/oder Signalisierungsvorrichtung (1) nach Anspruch 7, **dadurch gekennzeichnet, dass** die zweite Gelenkverbindung (22), bezogen auf die Hauptemissionsrichtung der Lichtstrahlen (L), zur dritten Gelenkverbindung (34) versetzt ist.

13. Beleuchtungs- und/oder Signalisierungsvorrichtung (1) nach einem der vorhergehenden Ansprüche, **dadurch gekennzeichnet, dass** ein zwischen dem ersten Leuchtmodul (3) und einer Wand des Gehäuses (2) gemessener erster Spielraum (D₁) von einem zwischen dem zweiten Leuchtmodul (4) und derselben Wand des Gehäuses (2) gemessenen zweiten Spielraum (D₂) verschieden ist.

14. Beleuchtungs- und/oder Signalisierungsvorrichtung (1) nach einem der vorhergehenden Ansprüche, **dadurch gekennzeichnet, dass** der Aktuator (6) Mittel zur Steuerung der Drehbewegung des Betätigungsmittels (5) bildet.

15. Beleuchtungs- und/oder Signalisierungsvorrichtung (1) nach Anspruch 14, **dadurch gekennzeichnet, dass** der bewegliche Teil (7) des Aktuators (6) ein Einstellteil (11), das eine erste Gelenkverbindung (15) mit dem Betätigungsmittel (5) trägt, translatorisch anreibt.

## Claims

1. Motor vehicle lighting and/or signalling device (1) comprising a housing (2) housing at least a first lighting module (3) for emitting first rays of light in a main direction of emission (L), said first module being able to pivot about a first axis of rotation (A₁), a second lighting module (4) for emitting second rays of light in the same main direction of emission, said second module being able to pivot about a second axis of rotation (A₂), and a manoeuvring means (5) which is common to said two lighting modules (3, 4), the manoeuvring means (5) being able to rotate about an axis of pivoting (A₃) and comprising a first arm (19) associated with the first lighting module (3) and a second arm (19') associated with the second lighting module (4), the first arm (19) being associated with an upper part of the first lighting module (3) while the second arm (19') is associated with a lower part of the second lighting module (4), said first axis of rotation (A₁) of the first module (3) being formed in the lower part of the first module while said second axis of rotation (A₂) of the second module (4) is formed in the upper part of the second module, the first arm (19) of the manoeuvring means bearing a second articulated connection (22) with the first module, the manoeuvring means further comprising an actuator (6), such as a linear actuator of the electric motor type, which comprises a mobile part (7) capable of translational movement along an axis of sliding (B₁), preferably orthogonal to the first axis of rotation (A₁) and to the second axis of rotation (A₂), **characterized in that** the first module is supported by a first retaining frame (24) which is able to move in a rotational movement about the first axis of rotation (A₁), said second articulated connection (22) being positioned between said first arm (19) and said first retaining frame (24), and **in that** the mobile part (7) is fixed to an intermediate piece (8) which comprises a slide (9) able to guide, in a vertical translational movement, a sliding of the intermediate piece (8) with respect to the housing (2) in the position in which the lighting and/or signalling device is used on the motor vehicle.

2. Lighting and/or signalling device (1) according to Claim 1, **characterized in that** said axes of rotation are substantially parallel to the axis of pivoting (A₃).

3. Lighting and/or signalling device (1) according to Claim 1 or 2, **characterized in that** said arms are arranged one on each side of the axis of pivoting (A₃).

4. Lighting and/or signalling device (1) according to any one of the preceding claims, **characterized in that** two first retaining points (27, 27') for the first frame (24) determine the first axis of rotation (A₁).

5. Lighting and/or signalling device (1) according to the preceding claim, **characterized in that** the first retaining points (27, 27') are of the ball-swivel type.

6. Lighting and/or signalling device (1) according to either one of Claims 4 and 5, **characterized in that** the first retaining frame (24) comprises, on each side of the first module (3), a supporting arm (25) which supports the first retaining points (27, 27') and a member (23) which is connected with the second articulated connection (22) .

7. Lighting and/or signalling device (1) according to any one of the preceding claims, **characterized in that** the second arm (19') of the manoeuvring means (5) supports a third articulated connection (34) with the second module (4).

8. Lighting and/or signalling device (1) according to Claim 7, **characterized in that** the second module (4) is supported by a second retaining frame (28) which is able to move in a rotational movement about the second axis of rotation (A₂), said third articulated connection (34) being positioned between said second arm (19') and said second retaining frame (28).

9. Lighting and/or signalling device (1) according to the preceding claim, **characterized in that** two second retaining points (32, 32') for the second frame (28) determine the second axis of rotation (A₂).

10. Lighting and/or signalling device (1) according to the preceding claim, **characterized in that** the second retaining points (32, 32') are of the ball-swivel type.

11. Lighting and/or signalling device (1) according to either one of Claims 9 and 10, **characterized in that** the second retaining frame (28) comprises, on each side of the second module (4), a branch (30) that supports the second retaining points (32, 32') and a branch (31) that is connected with the third articulated connection (34).

12. Lighting and/or signalling device (1) according to Claim 7, **characterized in that** the second articulated connection (22) is offset with respect to the third articulated connection (34) relative to the main direction of emission of the rays of light (L).

13. Lighting and/or signalling device (1) according to any one of the preceding claims, **characterized in that** a first displacement (D₁), measured between the first lighting module (3) and a wall of the housing (2), is different from a second displacement (D₂), measured between the second lighting module (4) and that same wall of the housing (2).

14. Lighting and/or signalling device (1) according to any one of the preceding claims, **characterized in that** the actuator (6) forms means for controlling the rotation of the manoeuvring means (5).

15. Lighting and/or signalling device (1) according to Claim 14, **characterized in that** the mobile part (7) of the actuator (6) drives the translational movement of an adjusting piece (11) bearing a first articulated connection (15) with said manoeuvring means (5).
